# EUROPEAN PATENT SPECIFICATION

(11) **EP 1 950 457 B1**
(45) Date of publication and mention of the grant of the patent: **22.12.2010**
(21) Application number: 08250290.7
(22) Date of filing: 23.01.2008
(51) Int. Cl.: F16H 57/00, F16H 57/04, F16H 57/02, B62M 9/04

(54) **Belt-type continuously variable transmission having resin block belt and motorcycle including belt-type continuously variable transmission**
Stufenloser Riemenantrieb mit Harz-Treibriemen und Motorrad mit stufenlosem Riemenantrieb
Transmission à variation continue de type courroie dotée d'une courroie en bloc de résine et motocyclette dotée de la transmission à variation continue de type courroie

(30) Priority: 26.01.2007 JP 2007016491
(43) Date of publication of application: 30.07.2008
(73) Proprietor: Yamaha Hatsudoki Kabushiki Kaisha, Shizuoka-ken Shizuoka 438-8501 (JP)
(72) Inventor: Ishida, Yousuke, Shizuoka-ken 438-8501 (JP)
(74) Representative: Grünecker, Kinkeldey, Stockmair & Schwanhäusser Anwaltssozietät

(56) References cited:
- EP-A- 1 164 263
- EP-A- 1 201 535
- JP-A- 9 329 217
- JP-A- 2002 147 582

## Description

The present invention relates to a belt-type continuously variable transmission having a resin block belt, and a motorcycle including this belt-type continuously variable transmission.

For example, JP-A-2002-147582 discloses a motorcycle which includes a belt-type continuously variable transmission having a resin block belt, and others. The resin block belt has higher durability than that of a conventional rubber belt, and therefore a belt-type continuously variable transmission which uses the resin block belt has higher durability as well.

The resin block belt is formed by combining a plurality of resin blocks having higher hardness than that of rubber. Thus, the sound generated by collision between the resin block belt and a primary sheave or a secondary sheave is larger than the sound generated by collision between the rubber belt and the primary or secondary sheave in related art. Thus, noise generated from a belt-type continuously variable transmission using the resin block belt is larger than noise generated from a related-art belt-type continuously variable transmission using the rubber belt.

For reducing the noise generated by the resin block belt, such a structure is considered which includes a sound absorbing material disposed inside and outside a transmission case as in the structure of the belt-type continuously variable transmission shown in JP-A-2002-147582, for example. However, even when the sound absorbing material is provided inside and outside the transmission case, it is difficult to sufficiently prevent escape of noise generated by the resin block belt to the outside.

JP 09-329217 discloses a belt-type continuously variable transmission according to the preamble of independent claims 1 and 2.

The invention has been developed in consideration of the problems described above to provide a technology which sufficiently prevents escape of noise generated by a resin block belt to the outside.

### SUMMARY

Aspects of the invention are set out in the accompanying claims.

According to a first aspect of the invention a belt-type continuously variable transmission comprises a primary sheave, a secondary sheave, a resin block belt, and a transmission case. The resin block belt is wound around the primary sheave and the secondary sheave. The transmission case defines the section of a belt chamber accommodating the primary sheave, the secondary sheave, and the resin block belt.
The transmission case includes an air passage connecting the inside and the outside of the belt chamber, and wherein a first portion of the inner wall of the air passage is located in such a position as to collide with sound waves travelling from the inside of the belt chamber toward the outside, and a second portion of the inner wall of the air passage comprises a sound absorbing member attached to the inner wall of the air passage downstream of said first portion and attached to the inner wall of the air passage in such a position as to collide with sound waves travelling from the inside of the belt chamber towards the outside.

A belt-type continuously variable transmission according to a second aspect of the invention includes a primary sheave, a secondary sheave, and a resin block belt, and a transmission case. The resin block belt is wound around the primary sheave and the secondary sheave. The transmission case defines the section of a belt chamber accommodating the primary sheave, the secondary sheave, and the resin block belt. The Transmission case includes an air passage communicating with the belt chamber, and a sound absorbing member. The sound absorbing member is attached to the belt chamber surface of a projection provided inside the exhaust passage.

An embodiment of the invention can restrict escape of noise generated by a resin block belt to the outside.

### BRIEF DESCRIPTION OF THE DRAWINGS

Embodiments of the present invention will be described hereinafter, by way of example only, with reference to the drawings
Fig. 1 is a right side view of a motorcycle according an embodiment of the invention.
Fig. 2 is a right side view of a central portion of the motorcycle according to the embodiment of the invention.
Fig. 3 is a cross-sectional view of an engine unit.
Fig. 4(a) is a cross-sectional view of a resin block belt, and Fig. 4(b) is a side view of the resin block belt.
Fig. 5 is a right side view of a second case block.
Fig. 6 is a right side view of the second case block to which a clutch cover is attached.
Fig. 7 is a right side view of the second case block to which the clutch cover and an inside case are attached.
Fig. 8 is a perspective view of the second case block to which the clutch cover, the inside case, and an outside case are attached as viewed from below inclined to the front.
Fig. 9 is a right side view of the second case block to which the clutch cover, the inside case, and the outside case are attached.
Fig. 10 is a cross-sectional view taken along a line X-X in Fig. 9.
Fig. 11 is a cross-sectional view taken along a line XI-XI in Fig. 10.
Figs 12(a) and 12(b) are development elevations showing two divided portions of an air chamber.
Fig. 13 is a cross-sectional view taken along a line XIII-XIII in Fig. 12.
Fig. 14 schematically illustrates a position of a sound absorbing member according to a modified example 1.
Fig. 15 schematically illustrates positions of the sound absorbing members according to a modified example 2.
Fig. 16 schematically illustrates a position of the sound absorbing member according to a modified example 3.
Fig. 17 schematically illustrates positions of the sound absorbing members according to a modified example 4.

### DETAILED DESCRIPTION

The present inventors determined that the main component of noise generated from a belt-type continuously variable transmission having a resin block belt is mostly a pitch noise produced by sequential shifts of plural resin blocks. In addition, they found that the pitch noise is so-called high-frequency sound. They noticed that high-frequency sound generally has characteristics of high rectilinear propagation and low penetrability. Based on these findings, the inventors have developed the invention described herein.

When an air passage communicating with a belt chamber extends in a straight direction, the high-frequency sound having high rectilinear propagation escapes chiefly through the air passage to the outside. Considering this fact, in an embodiment of the invention a sound absorbing material is attached to the inner wall of the air passage connecting the inside and the outside of the belt chamber in such a position that sound wave traveling through the air passage can collide with the sound absorbing material. This arrangement of the sound absorbing material effectively prevents escape of the high-frequency sound generated by the resin block belt from the belt chamber.

According to this embodiment, at least a bended, or bent, portion (i.e. a portion having a bend) is formed on the air passage for effectively preventing the escape of the high-frequency sound. More specifically, a plurality of bended portions are formed on an exhaust passage, and the sound absorbing materials are provided on the bended portions.

Additional sound absorbing materials may be affixed to the inside and outside of a transmission case for further reducing escape of noise to the outside. However, since the noise generated by the resin block belt can be effectively prevented by disposing the sound absorbing material within the air passage in such a position that the main flow of air traveling through the air passage collides with the sound absorbing material as discussed above due to the characteristics of high-frequency sound as high rectilinear propagation and comparatively low penetrability through an object, relatively high sound prevention effect can be obtained even when the sound absorbing materials are not affixed to the inside and outside of the transmission case. That is, the sound from the belt chamber can be effectively prevented and the size reduction of the belt-type continuously variable transmission can be achieved by attaching the sound absorbing material to the inside wall of the air passage such that the main flow of air passing through the air passage collides with the sound material and by eliminating the sound absorbing materials affixed to the inside and outside of the transmission case. Moreover, the cooling effect inside the transmission case can be enhanced by eliminating the sound absorbing materials affixed to the area having thermal insulation effect and the inside and outside of the transmission case. As a result, the life of the belt-type continuously variable transmission can be prolonged.

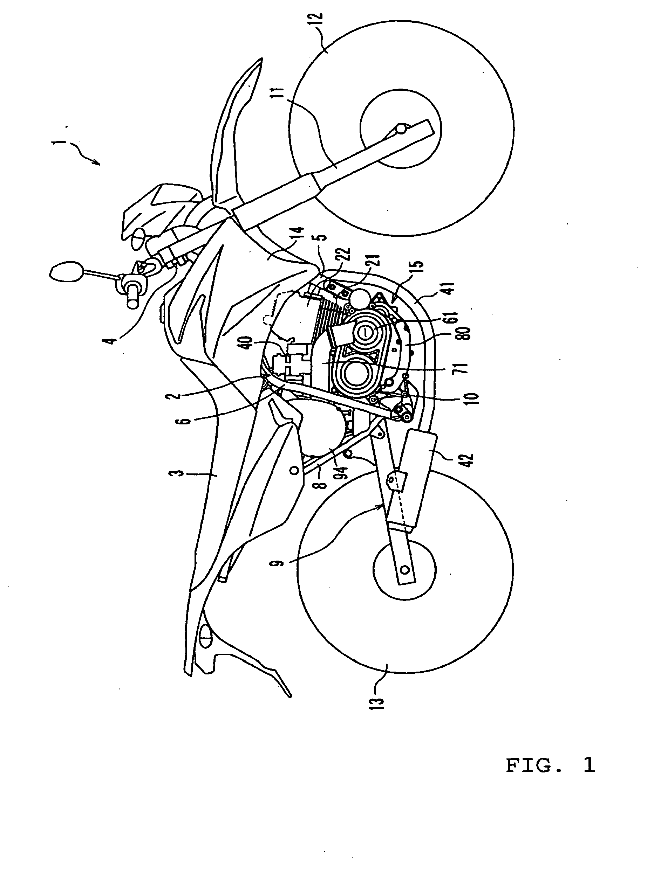

A motorcycle 1 according to this embodiment is hereinafter described in detail with reference to Figs. 1 through 13. In this embodiment, the off-road-type motorcycle 1 shown in Fig. 1 is discussed as an example of a straddle-type vehicle according to the invention. However, the straddle-type vehicle of the invention is not limited to this type, but may be a motorcycle of types other than the off-road type. More specifically, examples of the straddle-type vehicle according to the invention include motorcycle type, motor-scooter type, so-called moped type, and other types of motorcycle. The invention is also applicable to a straddle-type vehicle other than a motorcycle. For example, the straddle-type vehicle according to the invention may be an all terrain vehicle (ATV).

Fig. 1 is a side view of the motorcycle 1 according to this embodiment. Initially, the general structure of the motorcycle 1 is explained with reference to Fig. 1. In the following description, the front-rear and left-right directions refer to the front-rear and left-right directions as viewed from a rider sitting on a seat 3.

The motorcycle 1 has a body frame 2, a body cover 14, and the seat 3. The body cover 14 is attached in such a manner as to cover a part of the body frame 2. The seat 3 is attached to the body cover 14.

The body frame 2 has a steering head pipe 4, a down tube 5, and a main pipe 6. The down tube 5 is extended downward from the steering head pipe 4, bended at an intermediate portion, and further extended substantially in the horizontal direction from the intermediate portion. The main pipe 6 positioned above the down tube 5 extends toward the rear from the steering head pipe 4.

A pivot shaft 10 is attached to the lower end of the main pipe 6. A rear arm 9 extending toward the rear is attached to the pivot shaft 10 such that the rear arm 9 can swing. rear wheel 13 is rotatably attached to the rear end of the rear arm 9. The lower end of the steering head pipe 4 is connected with a front fork 11. A front wheel 12 is rotatably attached to the lower end of the front fork 11.

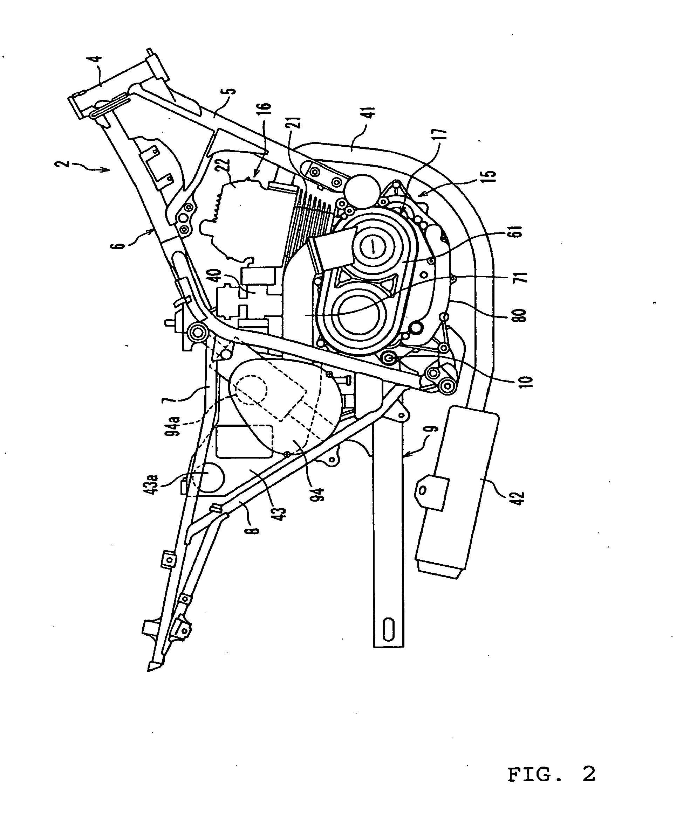

As illustrated in Fig. 2, a pair of seat rails 7 extending toward the rear are provided at an intermediate portion of the main pipe 6 . A back stay 8 is connected with a position slightly shifted toward the rear from the centers of the respective seat rails 7. The back stay 8 extends diagonally downward toward the front from the connecting portion with the seat rails 7. The distal end of the back stay 8 is connected with the lower end of the main pipe 6.

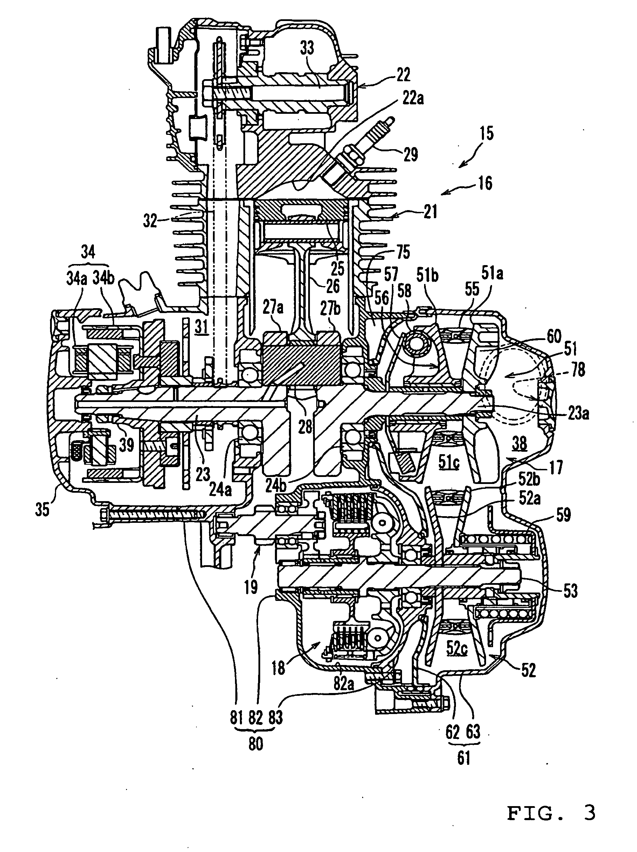

As illustrated in Figs. 1 and 2, an engine unit 15 is disposed between the down tube 5 and the main pipe 6 and attached to both. As illustrated in Fig. 3, the engine unit 15 is formed by combining an engine 16, a belt-type continuously variable transmission 17, and other components into one piece. The driving force generated by the engine unit 15 is transmitted to the rear wheel 13 via not-shown power transmitting means such as chain belt. In the following description, the belt-type continuously variable transmission 17 is abbreviated as CVT 17.

Fig. 3 shows the cross section of the engine unit 15. As illustrated in Fig. 3, the engine unit 15 has the engine 16, the CVT 17, a centrifugal clutch 18, and a speed reduction mechanism 19. While the engine 16 is a four-stroke single-cylinder engine in this example, the engine 16 may be a two-stroke engine or multi-stroke engine, for example.

The engine 16 has a crank case 80, a cylinder 21, and a cylinder head 22. The cylinder 21 is attached to the crank case 80. The cylinder head 22 is attached to the distal end of the cylinder 21.

A piston 25 is inserted into the cylinder 21 such that the piston 25 can slide therein. One end of a connecting rod 26 is connected with the piston 25. The other end of the connecting rod 26 is connected with a crank pin 28. The crank pin 28 is inserted into through holes formed on a left crank arm 27a and a right crank arm 27b, and fixed to the through holes.

The cylinder head 22 has a concave (a concave portion) 22a communicating with the inside space of the cylinder 21, and intake port and exhaust port (not shown) communicating with the concave 22a. The concave 22a constitutes a part of a combustion chamber. An ignition plug 29 is attached to the cylinder head 22 such that the ignition area of the ignition plug 29 can be exposed to the outside.

As illustrated in Figs. 1 and 2, an intake pipe 40 is connected with the intake port. As illustrated in Fig. 2, the intake pipe 40 extends toward the rear from the cylinder head 22. An air chamber 43 is connected with the rear end of the intake pipe 40. The air chamber 43 has an intake hole 43a. Outside air is taken through the intake hole 43a into the air chamber 43. The outside air taken into the air chamber is supplied to the combustion chamber via the intake pipe 40 and the intake port.

As illustrated in Figs. 1 and 2, an exhaust pipe 41 is connected with the exhaust port. As illustrated in Fig. 2, the exhaust pipe 41 is connected with the front region of the cylinder head 22. The exhaust pipe 41 extends toward the front from the cylinder head 22, crosses over the down tube 5, extends downward before the engine unit 15, and then extends below the engine unit 15 toward the rear. A muffler 42 is connected with the rear end of the exhaust pipe 41.

As illustrated in Fig. 3, a cam chain chamber 31 connecting the interior of the crank case 80 and the interior of the cylinder head 22 is provided in the left part inside the cylinder 21. A timing chain 32 is accommodated in the cam chain chamber 31. The timing chain 32 is wound around a crank shaft 23 and a cam shaft 33. Thus, the cam shaft 33 rotates in accordance with the rotation of the crank shaft 23. The rotation of the cam shaft 33 opens and closes not-shown intake valve and exhaust valve.

The crank case 80 has a first case block 81 disposed on the left side, a second case block 82 disposed on the right side, and a clutch cover 83. The first case block 81 and the second case block 82 face each other in the vehicle width direction. A concave (a concave portion) 82a extending to the left is formed in the rear half of the second case block 82. The clutch cover 83 closes the concave 82a. A space defined by the concave 82a and the clutch cover 83 constitutes a clutch chamber containing the centrifugal clutch 18.

The crank shaft 23 is accommodated in the crank case 80. The crank shaft 23 horizontally extends in the vehicle width direction. The crank shaft 23 is supported by the first case block 81 via a bearing 24a. The crank shaft 23 is also supported by the second case block 82 via a bearing 24b.

A dynamo case 35 is attached to the left side of the front half of the first case block 81. A dynamo chamber is defined by the dynamo case 35 and the first case block 81. A dynamo 34 is accommodated in the dynamo chamber. The dynamo 34 is attached to the crank shaft 23 within the dynamo chamber. The dynamo 34 has a stator 34a and a rotor 34b. The rotor 34b is fixed to a sleeve 39 rotating with the crank shaft 23. The stator 34a is fixed to the dynamo case 35. This structure allows the rotor 34b to rotate relative to the stator 34a in accordance with the rotation of the crank shaft 23 for power generation.

A transmission case 61 containing the CVT 17 is attached to the right side of the second case block 82. The transmission case 61 defines the section of a belt chamber 38 accommodating the CVT 17. The transmission case 61 has an inside case 62 made of resin and disposed on the right side of the second case block 82, and an outside case 63 positioned on the right side of the inside case 62.

The CVT 17 has a primary sheave 51 and a secondary sheave 52. The primary sheave 51 is attached to the crank shaft 23. More specifically, the right end of the crank shaft 23 penetrates through the second case block 82 and the inside case 62, and reaches the belt chamber 38. The primary sheave 51 is attached to the right end of the crank shaft 23. In the following description, the right portion of the crank shaft 23 is also referred to as a "primary sheave shaft 23a". More accurately, the primary sheave shaft 23a is constituted by the portion of the crank shaft 23 positioned on the right side of the bearing 24b.

More specifically, the primary sheave 51 has a primary fixed sheave member 51a and a primary movable sheave member 51b. The primary fixed sheave member 51a is fixed to the right end of the primary sheave shaft 23a. The primary movable sheave member 51b positioned on the left side of the primary fixed sheave member 51a is attached to the primary sheave shaft 23a. The primary movable sheave member 51b can shift relative to the primary sheave shaft 23a in its axial direction.

The left side surface of the primary fixed sheave member 51a has a tapered shape expanding to the right. The right side surface of the primary movable sheave member 51b has a tapered shape expanding to the left. These left side surface of the primary fixed sheave member 51a and right side surface of the primary movable sheave member 51b form a substantially V-shaped belt groove 51c which has a width increasing toward the outside in the radial direction. A plurality of fan vanes 60 are provided on the right side surface of the primary fixed sheave member 51a.

A cam surface 56 is disposed on the left side surface of the primary movable sheave member 51b. A cam plate 57 is located on the left side of the primary movable sheave member 51b in such a position as to be opposed to the cam surface 56. The cam plate 57 is fixed to the primary sheave shaft 23a. The cam plate 57 engages with the primary movable sheave member 51b. This engagement prevents rotation of the primary movable sheave member 51b relative to the primary sheave shaft 23a. Roller weights 58 movable in the radially inside-outside direction are disposed between the cam surface 56 and the cam plate 57.

The secondary sheave 52 is positioned behind the primary sheave 51. The secondary sheave 52 is attached to a secondary sheave shaft 53. The secondary sheave 52 has a secondary fixed sheave member 52a and a secondary movable sheave member 52b. The secondary fixed sheave member 52a is fixed to the secondary sheave shaft 53. The secondary movable sheave member 52b positioned on the right side of the secondary fixed sheave member 52a is attached to the secondary sheave shaft 53. The secondary movable sheave member 52b can shift in the axial direction of the secondary sheave shaft 53.

The right side surface of the secondary fixed sheave member 52a has a tapered shape expanding to the left. The left side surface of the secondary movable sheave member 52b has a tapered shape expanding to the right. These right side surface of the secondary fixed sheave member 52a and left side surface of the secondary movable sheave member 52b form a substantially V-shaped belt groove 52c having a width increasing toward the outside in the radial direction.

A compression coil spring 59 is provided on the right side of the secondary movable sheave member 52b. The secondary movable sheave member 52b is urged to the left by the compression coil spring 59. Thus, the secondary movable sheave member 52b is urged toward the secondary fixed sheave member 52a by the compressing coil spring 59.

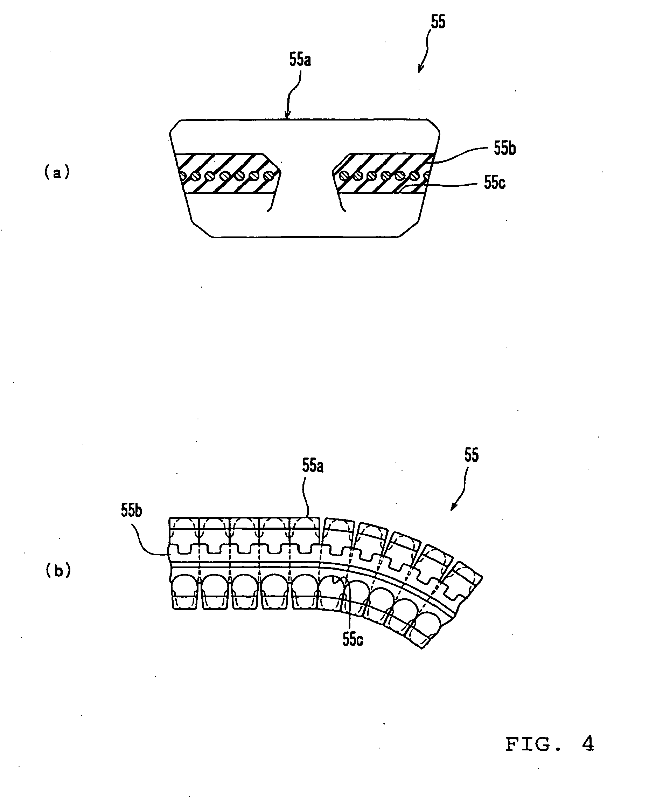

A resin block belt 55 is wound around the belt groove 51c of the primary sheave 51 and the belt groove 52c of the secondary sheave 52. The resin block belt 55 is a so-called resin block belt having a substantially V-shaped cross section. More specifically, the resin block belt 55 has a plurality of resin blocks 55a as illustrated in Fig. 4(a). The plural resin blocks 55a are arranged in a ring-band shape, and are connected with one another by a pair of flexible connecting members 55b. More specifically, each of the resin blocks 55a has a pair of concave portions (hereinafter concaves) 55c opposed to each other. The plural resin blocks 55a are connected with one another by fitting the connecting members 55b into the concaves 55c.

As illustrated in Fig. 3, the secondary sheave shaft 53 penetrates through the inside case 62 and the clutch cover 83 and reaches a clutch chamber. The centrifugal clutch 18 is attached to the secondary sheave shaft 53 in the clutch chamber. The centrifugal clutch 18 may be a wet-type multi-disc clutch as illustrated in Fig. 3, for example.

The centrifugal clutch 18 engages with the speed reduction mechanism 19. The rotation of the secondary sheave shaft 53 is transmitted to the speed reduction mechanism 19 via the centrifugal clutch 18. Then, the torque thus generated is transmitted from an output shaft (not shown) of the speed reduction mechanism 19 to the rear wheel 13 shown in Fig. 1 via the power transmitting means (not shown).

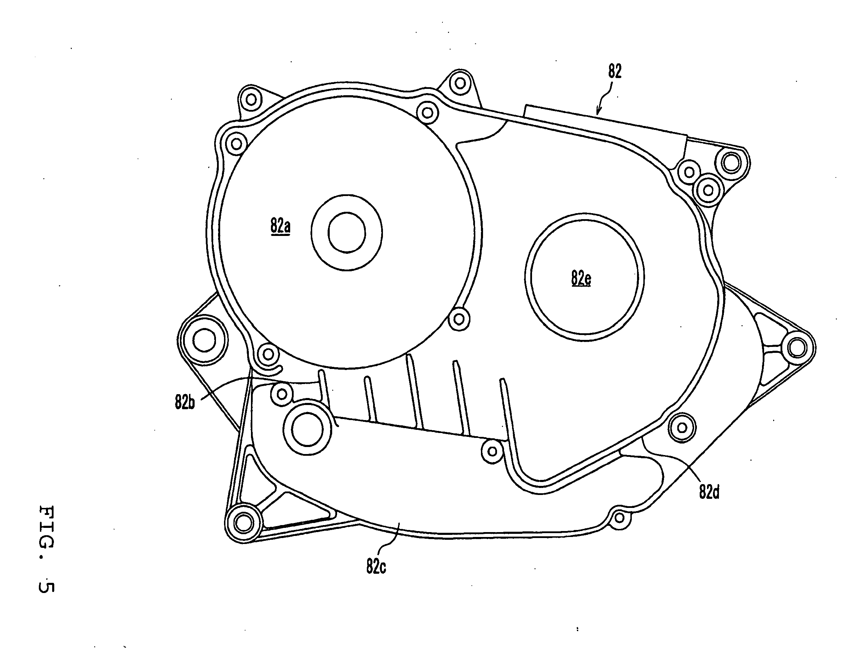

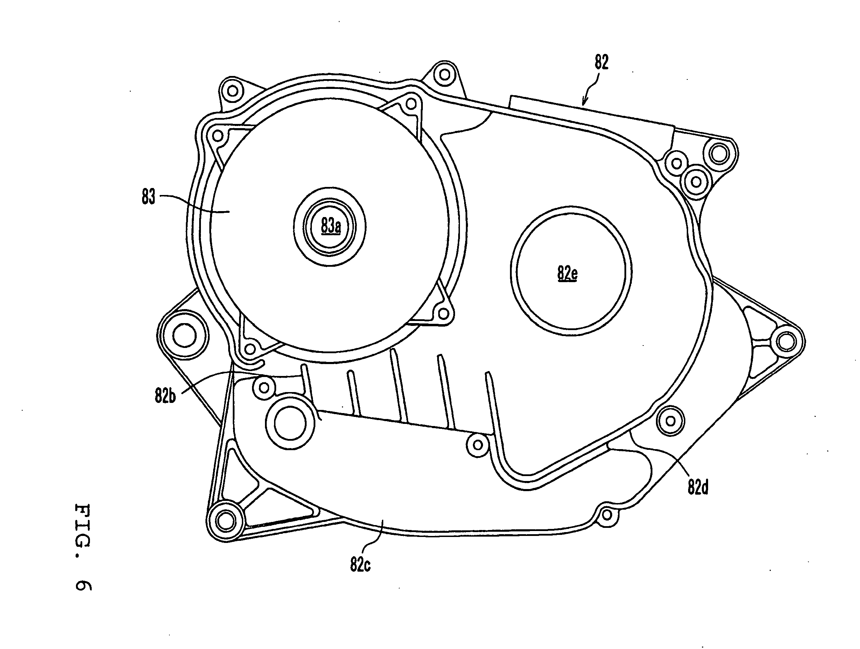

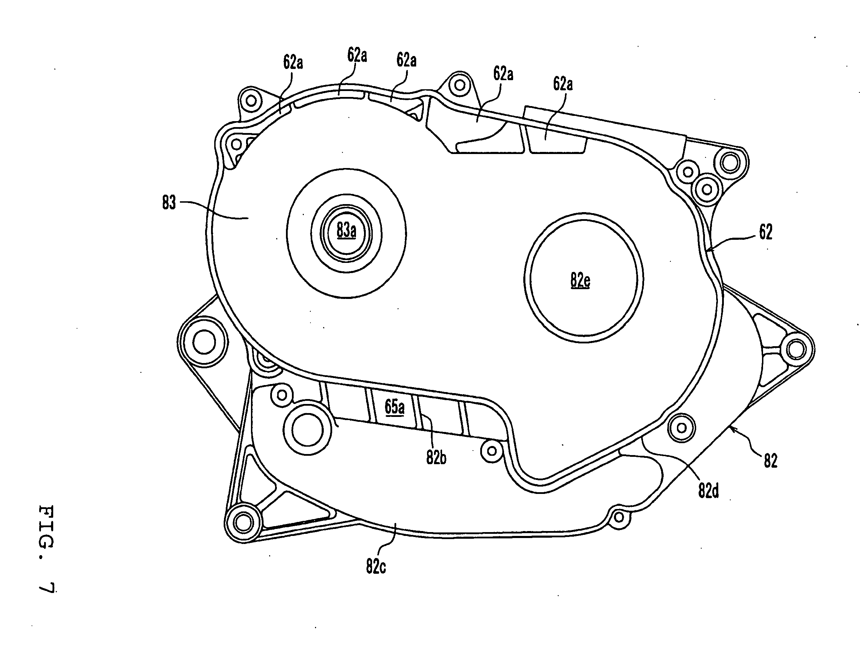

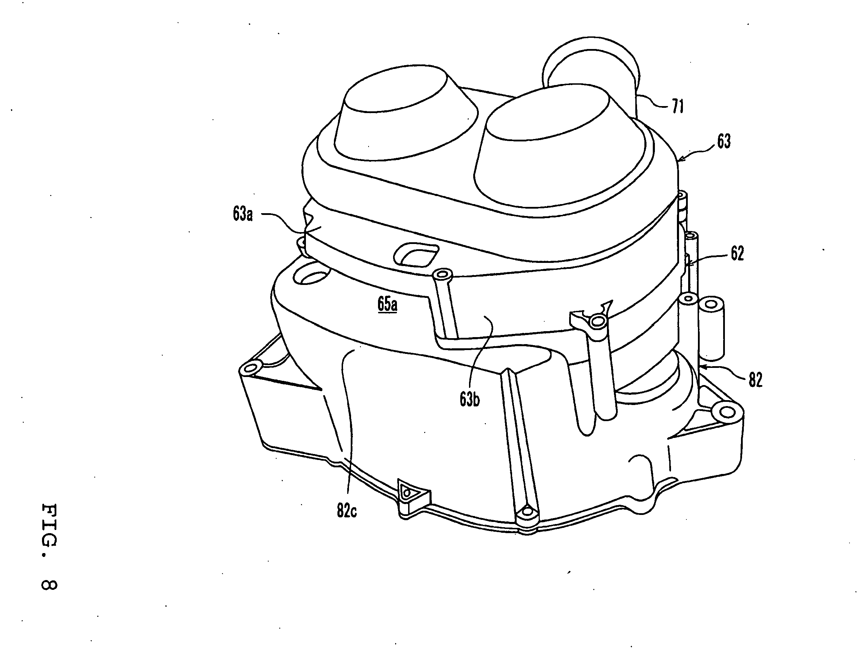

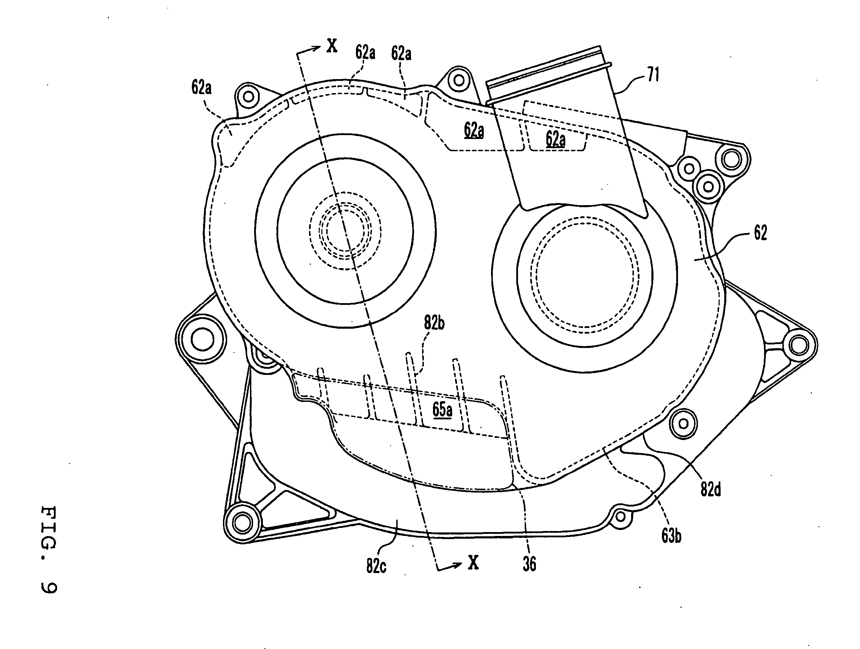

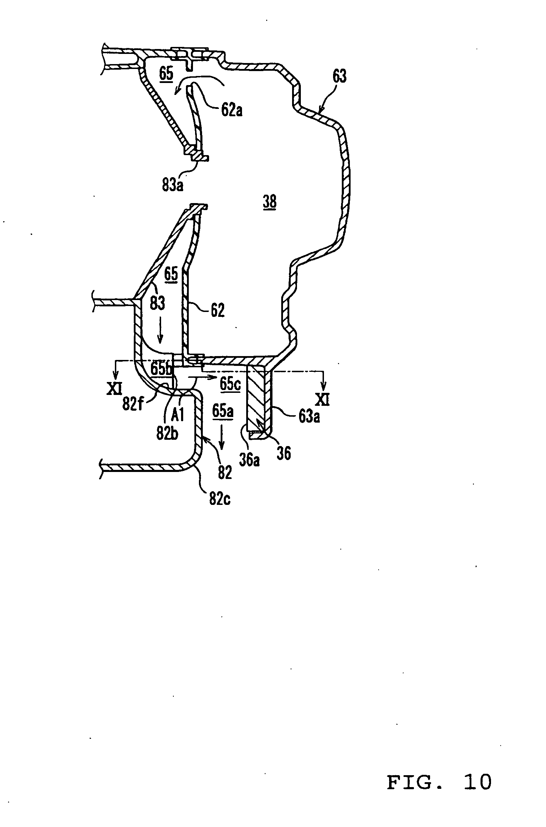

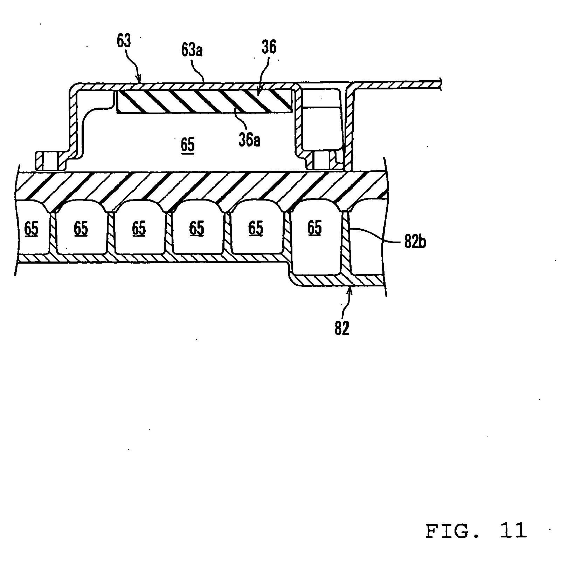

The air intake and exhaust to and from the belt chamber 38 are now explained in detail with reference to Fig. 5 and other figures. Fig. 5 is a right side view of the second case block 82. Fig. 6 is a right side view of the second case block 82 to which the clutch cover 83 is attached. Fig. 7 is a right side view of the second case block 82 to which the clutch cover 83 and the inside case 62 are attached. Fig. 8 is a perspective view of the second case block 82 to which the clutch cover 83, and the inside and outside cases 62 and 63 are attached as viewed from below inclined to the front. Fig. 9 is a right side view of the second case block 82 to which the clutch cover 83 and the inside and outside cases 62 and 63 are attached. Fig. 10 is a cross-sectional view taken along a line X-X in Fig. 9. Fig. 11 is a cross-sectional view taken along a line XI-XI in Fig. 10. Fig. 10 shows only the second case block 82, the clutch cover 83, and the transmission case 61 for simplifying the explanation.

As illustrated in Fig. 5, an opening 82e through which the primary sheave shaft 23a is inserted is formed in the front half of the second case block 82. A concave (a concave portion (or concave) 82a containing the clutch chamber is formed in the rear half of the second case block 82. As illustrated in Figs. 3 and 6, the concave 82a is closed by the clutch cover 83. An opening 83a through which the secondary sheave shaft 53 is inserted is formed at the center of the clutch cover 83.

A plurality of linear convexes (ribs) 82b are formed below the concave 82a. The plural convexes 82b are arranged in a line substantially in the horizontal direction. More accurately, the plural linear convexes 82b are positioned in a line in a direction slightly diagonally upward toward the rear. The respective linear convexes 82b extend in the up-down direction, and project further to the right from the right side surface of the second case block 82. That is, the respective linear convexes 82b project toward the inside case 62 from the right side surface of the second case block 82. As illustrated in Fig. 11, the plural linear convexes 82b contact the inside case 62. This structure allows the inside case 62 having relatively low strength to be appropriately supported.

As can be seen from the cross section shown in Fig. 11, a concaved portion having an arch shape is formed between each of the contact portions of the inside case 62 contacting the linear convexes 82b.

An expanding portion 82c is formed immediately below the plural linear convexes 82b of the second case block 82. The expanding portion 82c extends to a position on the right side of the right end of the linear convexes 82b. In other words, the expanding portion 82c expands to the outside of the right end of the linear convexes 82b. The expanding portion 82c extends in a wider range than the area where the plural linear convexes 82b are formed in the front-rear direction.

As illustrated in Figs. 3 and 7, the inside case 62 is disposed on the right side of the second case block 82. The inside case 62 covers substantially the entire part of the right region of the second case block 82 except for the openings 82e and 83a, the expanding portion 82c, and the lower region of the area where the plural linear convexes 82b are formed. As illustrated in Fig. 10, a space is produced between the inside case 62 and the second case block 82. A plurality of communication openings 62a through which this space communicates with the belt chamber 38 are formed in the upper region of the inside case 62 (see Fig. 3 as well). This structure allows the belt chamber 38 to communicate with the outside air via the communication openings 62a and the space between the inside case 62 and the second case block 82. According to this embodiment, the space between the inside case 62 and the second case block 82 constitutes an exhaust passage 65. As illustrated in Fig. 10, the exhaust passage 65 bends to the right by the expanding portion 82c to form a labyrinth structure. That is, the exhaust passage 65 has a plurality of bended, or bent, portions 65b. While the exhaust passage 65 has the plural bended portions 65b in this embodiment, the exhaust passage 65 may have one or plural curved portions. Alternatively, the exhaust passage 65 may have one or plural curved portions as well as one or plural bended portions.

As illustrated in Fig. 10, the outside case 63 is positioned on the right side of the inside case 62. The belt chamber 38 is defined by the outside case 63 and the inside case 62.

An extension 63a extending downward to a position lower than the lower end of the inside case 62 is provided on the lower rear portion of the outside case 63. The extension 63a and the second case block 82 are positioned away from each other. The extension 63a extends to a position opposed to the expanding portion 82c in the up-down direction. In other words, the extension 63a has a portion opposed to the linear convexes 82b in the vehicle width direction and a portion opposed to the expanding portion 82c provided below the linear convexes 82b.

The exhaust passage 65 bends downward by the extension 63a at a position downstream from the bended, or bent, portion 65b. Thus, the exhaust passage 65 has a bended portion 65c positioned downstream from the bended portion 65b. The bended portion 65c may be a curved portion.

A sound absorbing member 36 is attached to the inside surface (left surface) of the extension 63a. That is, the sound absorbing member 36 is attached to the left side surface of the extension 63a. The sound absorbing member 36 has a sound absorbing surface 36a crossing the projecting direction of the linear convexes 82b. More specifically, the sound absorbing member 36 as a face material is disposed in such a position as to cross the projection direction of the linear convexes 82b. The angle formed by the sound absorbing face 36a and the projecting direction of the linear convexes 82b may be a right angle. Alternatively, the angle formed by the sound absorbing surface 36a and the projecting direction of the linear convexes 82b may be an acute angle or an obtuse angle.

For obtaining high sound absorbing efficiency, it is preferable that the sound absorbing member 36 has a number of spaces inside its body. For example, the sound absorbing member 36 may be made of foamed material, glass wool, or steel wool. Examples of the foamed material include foamed resin such as foamed urethane, foamed rubber, and other materials.

As illustrated in Figs. 8 and 9, an expanding portion 63b is formed before the extension 63a of the outside case 63. The expanding portion 63b is expanded to a position lower than the upper end of the expanding portion 82c in the up-down direction. The expanding portion 63b covers the space between the extension 63a and the second case block 82 in the front view.

As illustrated in Fig. 3, an intake opening 78 is formed on the upper surface of the outside case 63. An intake duct 71 is connected with the intake opening 78 (see Figs. 1, 2 and 8 as well). As illustrated in Figs. 1 and 2, the intake duct 71 extends upward from the transmission case 61, and then extends in the horizontal direction toward the rear from the intermediate portion of the intake duct 71. An air chamber 94 is connected with the rear side end of the intake duct 71. The air chamber 94 has a function of purifying the outside air introduced thereto. More specifically, the air chamber 94 has a function of removing dust contained in the outside air thus taken.

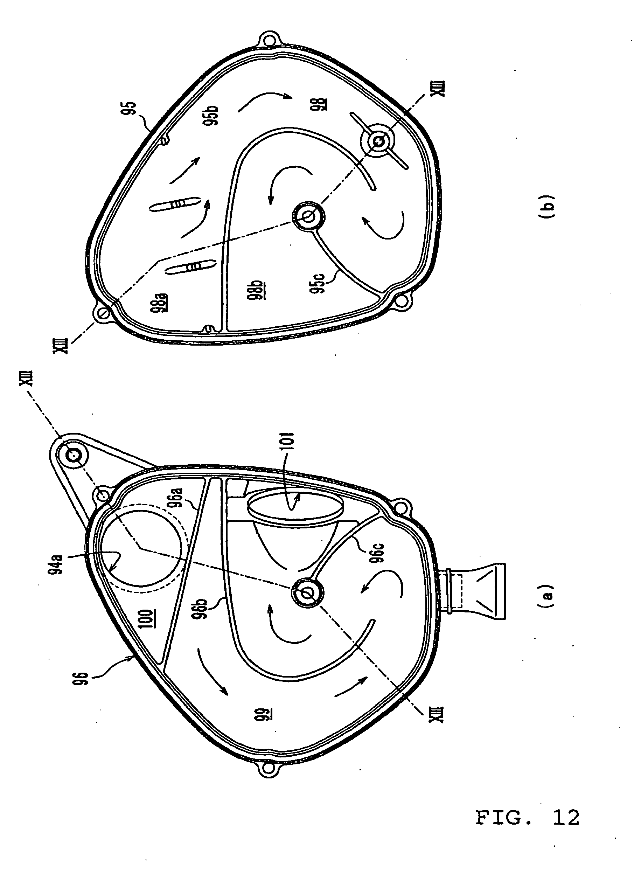

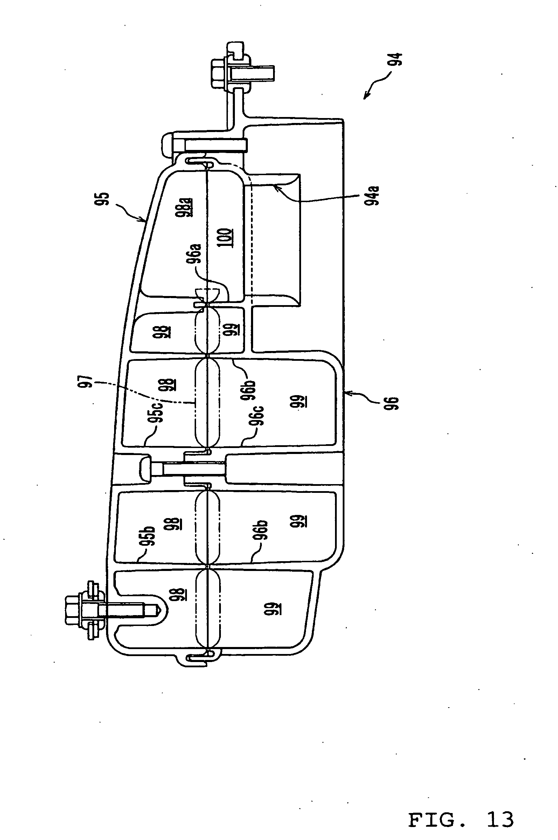

Figs. 12(a) and 12(b) are development elevations showing two divided parts of the air chamber 94. Fig. 13 is a cross-sectional view of the air chamber 94. As illustrated in Figs. 12, the air chamber 94 has a first casing 95 and a second casing 96 combined in such a manner as to be opposed to each other.

As illustrated in Fig. 12(b), walls 95b and 95c are provided inside the first casing 95. These walls 95b and 95c define a first intake passage 98 extending in a zigzag line.

As illustrated in Fig. 12(a), walls 96a, 96b and 96c are provided inside the second casing 96. The wall 96a divides the interior of the second casing 96 into two areas. The second casing 96 has an intake opening 94a open to an upper inside area 100 within the second casing 96. The inside area 100 communicates with a base end 98a of the first intake passage 98 of the first casing 95 (see Fig. 12(b)).

The walls 96b and 96c are provided in the lower inside area of the second casing 96. These walls 96b and 96c define a second intake passage 99 extending in a zigzag line within the lower inside area of the second casing 96. As illustrated in Fig. 13, the second intake passage 99 and the first intake passage 98 face each other with an air cleaner 97 interposed therebetween.

The wall 96b has a shape corresponding to that of the wall 95b. The wall 96c has a shape corresponding to the shape of the wall 95c. Thus, the first intake passage 98 and the second intake passage 99 have mirror images of each other.

As discussed above, the plural vanes 60 are provided on the left side surface of the primary fixed sheave member 51a disposed within the belt chamber 38 (see Fig. 3) . The plural vanes 60 rotate with the rotation of the primary sheave shaft 23a. That is, the plural vanes 60 rotate with the rotation of the crank shaft 23. As a result, absorbing force toward the belt chamber 38 is generated, and the outside air taken from the air chamber 94 is taken into the belt chamber 38 by the rotation of the plural vanes 60.

More specifically, the outside air is initially taken from the intake opening 94a into the air chamber 94. The outside air taken from the intake opening 94a is introduced to the base end 98a of the first intake passage 98 via the inside area 100 (see Figs. 12 and Fig. 13). The air introduced to the base end 98a flows from the base end 98a to a distal end 98b, and a part of this air passes through the air cleaner 97 and flows into the second intake passage 99. The air having flowed into the second intake passage 99 is supplied to the intake duct 71 via an opening 101 formed at the distal end of the second intake passage 99 (see Figs. 1 and 2).

The air supplied to the intake duct 71 is supplied to the front half of the belt chamber 38 (see chiefly Figs. 3 and 10). That is, the air supplied to the intake duct 71 is further supplied to the area where the primary sheave 51 is disposed. The CVT 17 is cooled by the outside air thus taken. The air supplied to the belt chamber 38 flows within the belt chamber 38, passes through the exhaust passage 65 formed between the inside case 62 and the second case block 82, and then is discharged through the communication openings 62a.

The discharge air initially advances downward in the exhaust passage 65 (see Fig. 10). Then, the flow direction of the discharge air is changed by the bended portion 65b. That is, the air flowing downward is changed to the air flowing to the right by collision with a wall 82f. Then, the discharge air collides with the sound absorbing surface 36a of the sound absorbing member 36 at the bended portion 65c, where the flow direction is further changed to the downward direction. Thereafter, the air is discharged through an exhaust opening 65a.

As discussed above, the sound absorbing member 36 is attached to the inner wall of the discharge passage 65 in such a position as to collide with the air passing through the discharge passage 65. More specifically, the sound absorbing member 36 is attached to the inside wall of the extension 63a constituting the bended portion 65c.

The sound absorbing member 36 has the sound absorbing surface 36a. The sound absorbing surface 36a crosses the extending direction of a portion of the exhaust passage 65 close to the belt chamber 38 and away from the sound absorbing member 36. In other words, the sound absorbing surface 36a is not disposed in parallel with the extending direction of the portion of the exhaust passage 65 close to the belt chamber 38 and away from the sound absorbing member 36. More specifically, the sound absorbing surface 36a may be disposed orthogonal to the extending direction of the portion of the exhaust passage 65 close to the belt chamber 38 and away from the sound absorbing member 36. Alternatively, the angle formed by the sound absorbing surface 36a and the extending direction of the portion of the exhaust passage 65 close to the belt chamber 38 and away from the sound absorbing member 36 may be an acute angle or an obtuse angle. According to this embodiment, the area of the exhaust passage 65 close to the belt chamber 38 and away from the sound absorbing member 36 is specifically the area between the bended portion 65b and the bended portion 65c.

The plural linear convexes 82b extend along the extending direction of the exhaust passage 65.

As discussed above, the sound absorbing member 36 has the sound absorbing surface 36a inclined at an angle to the projecting direction of the linear convexes 82b. In other words, as illustrated in Fig. 10, the sound absorbing member 36 has the sound absorbing surface 36a which crosses an extending direction A1 of the portion of the exhaust passage 65 close to the belt chamber 38 upstream from the sound absorbing member 36, i.e. the area disposed between the bended portion 65b and the bended portion 65c. The sound member 36 is located in such a position as to collide with the sound wave traveling from the inside of the belt chamber 38 toward the outside. Concerning the relationship between the flow of exhaust air and the sound absorbing member 36, the sound absorbing member 36 is disposed in such a position as to collide with the air flowing through the exhaust passage 65.

Thus, the sound absorbing member 36 effectively absorbs high-frequency sound having high rectilinear propagation generated by the resin block belt 55. As a result, escape of the high-frequency sound generated by the resin block belt 55 from the exhaust passage 65 can be effectively prevented. Moreover, the high-frequency sound having low penetrability through an object does not easily penetrate through the outside case 63 or other components to escape therefrom. Thus, escape of noise generated by the resin block belt 55 to the outside can be effectively prevented.

These advantages can be obtained as long as the sound absorbing member 36 is disposed in such a position as to collide with the sound wave traveling from the inside of the belt chamber 38 toward the outside. Thus, it is not necessarily required that the sound absorbing surface 36a is disposed orthogonal to the traveling direction of the sound wave traveling from the inside of the belt chamber 38 toward the outside. More specifically, it is not necessarily required that the sound absorbing surface 36a is disposed orthogonal to the extending direction of the portion of the exhaust passage 65 close to the belt chamber 38 and away from the sound absorbing member 36. For example, even when the angle formed by the sound absorbing surface 36a and the traveling direction of the sound traveling from the inside of the belt chamber 38 toward the outside is an acute angle or an obtuse angle, the above advantages can be offered. In other words, even when the angle formed by the sound absorbing surface 36a and the extending direction of the portion of the exhaust passage 65 close to the belt chamber 38 and away from the sound absorbing member 36 is an acute angle or an obtuse angle, the above advantages can be offered.

For reducing the escape of noise generated by the resin block belt 55 to the outside more effectively, it is preferable that the sound absorbing member is provided on the inside or outside of the outside case 63. In this case, escape of the high-frequency sound penetrating through the outside case 63 can be more securely prevented. However, as discussed above, the high-frequency sound has low penetrability through an object. Thus, the escape of the sound generated by the resin block belt 55 to the outside can be effectively prevented even when the sound absorbing member is not disposed on the inside or outside of the outside case 63. Thus, the escape of the sound generated by the resin block belt 55 to the outside can be effectively prevented without requiring the sound absorbing member on the inside or outside of the outside case 63 and therefore without increasing the size of the CVT 17 and further the size of the engine unit 15.

Moreover, since the necessity for providing the sound absorbing member having thermal insulation on the inside or outside of the outside case 63 is eliminated, relatively high heat release efficiency through the outside case 63 can be achieved. As a result, the cooling efficiency of the CVT 17 can be improved.

It is preferable that the sound absorbing member 36 is disposed on the exhaust side as in this embodiment, since high-frequency sound does not easily escape from the intake side where the air filter 79 having the sound absorbing capability as well is generally disposed. In addition, this structure is preferable since noise in the belt chamber 38 escaping to the outside from the exhaust passage for discharging the air is relatively larger than noise in the belt chamber 38 escaping from the intake passage.

The sound absorbing member 36 may be disposed at a position other than the extension 63a. It is preferable that the sound absorbing member 36 is provided on the inner wall of the exhaust passage 65 at the outside corner of the portion where flow of the air to be discharged changes such as the bended portion 65b and the bended portion 65c. For example, the sound absorbing member 36 may be located on the wall 82f of the second case block 82. Also, the sound absorbing member 36 may be provided on both of the inner walls of the wall 82f and the extension 63a. In this case, further higher noise proof effect can be obtained.

According to this embodiment, the exhaust passage 65 has a labyrinth structure in addition to the equipment of the sound absorbing member 36. More specifically, the exhaust passage 65 has the plural bended portions 65b and 65c. Thus, high-frequency sound having entered the exhaust passage 65 collides with the wall at the positions of the plural bended portions 65b and 65c, and thereby decreases. More specifically, the high-frequency sound having entered the exhaust passage 65 collides with the wall 82f of the second case block 82 and decreases. Thus, escape of sound generated by the resin block belt 55 to the outside can be reduced further effectively. This noise reduction effect can be obtained by the collision between the high-frequency sound having entered the exhaust passage 65 and the wall of the components of the CVT 17. Thus, the noise reduction effect can be similarly obtained even when curved portions are provided instead of the bended portions 65b and 65c as in this embodiment. For acquiring further high noise reduction effect, it is particularly preferable that the number of the bended portions or curved portions to be formed is plural.

It is also preferable that each of the intake passages 98 and 99 covered by the air cleaner having sound absorbing capability has a labyrinth structure as in this embodiment. This structure further effectively prevents escape of high-frequency sound from the intake passages 98 and 99.

As illustrated in Fig. 11, the inside case 62 made of resin and having relatively low hardness is supported by the linear convexes 82b in this embodiment. This structure improves the durability of the inside case 62. As a method for enhancing the durability of the inside case 62, it is also considered to form a linear convex extending in the front-rear direction along the contour of the inside case 62, for example. In this case, a slit needs to be formed on the linear convex so as to secure the space of the exhaust passage 65. In this structure, however, it is difficult to secure a sufficiently wide space of the exhaust passage 65. When the width of the slit is enlarged to secure a sufficient space of the exhaust passage 65, the durability of the linear convex lowers. As a result, the durability of the inside case 62 lowers accordingly. However, in the structure having the linear convexes 82b which extend substantially in parallel with the extending direction of the exhaust passage 65 as in this embodiment, the durability of the inside case 62 increases while securing a relatively large space of the exhaust passage 65.

According to this embodiment, each portion between the contacting portions of the inside case 62 contacting the linear convexes 82b is concaved in an arched shape. Thus, a further wide space of the exhaust passage 65 can be secured.

The structure having the linear convexes 82b which extend along the flow of exhaust air as in this embodiment offers rectification effect of exhaust air. This effect reduces the noise of exhaust air. For further enhancing the rectification effect of exhaust air, it is preferable that the arrangement pitch of the linear convexes 82b is decreased. On the other hand, for enlarging the opening area of the exhaust passage 65, it is preferable that the pitch of the linear convexes 82b is increased. For widening the opening area of the exhaust passage 65, only the single linear convex 82b may be formed.

According to this embodiment, the communication openings 62a through which the exhaust passage 65 and the belt chamber 38 communicate with each other are open in the upper region of the belt chamber 38 as illustrated in Figs. 7, 9 and 10. Thus, even when water or mud enters the exhaust passage 65 through the exhaust opening 65a, the water or mud does not easily enter the belt chamber 38. In addition, since the lower portion of the exhaust opening 65a is covered by the extending portion (lower extending portion) 82c, enter of splashed water or mud through the exhaust opening 65a into the exhaust passage 65 can be effectively reduced. Moreover, since the exhaust opening 65a is covered by the extending portion 63b and the expanding portion 82d (front expanding portion) in the front view, enter of water or mud splashed by the front wheel 12 through the exhaust opening 65a into the exhaust passage 65 can be particularly effectively prevented.

The center of the secondary sheave 52 is positioned above the center of the primary sheave 51 from a lateral view. Thus, the exhaust opening 65a,is located at a relatively high position from the ground level. Accordingly, enter of the splashed water or mud into the exhaust passage 65 through the exhaust opening 65a can be effectively prevented.

In the above embodiment, the structure having the sound absorbing member 36 attached to the extension 63a has been discussed as an example. However, the attachment position of the sound absorbing member 36 is not particularly limited as long as the sound absorbing member 36 is disposed in such a position as to collide with sound wave traveling from the belt chamber 38 to the outside.

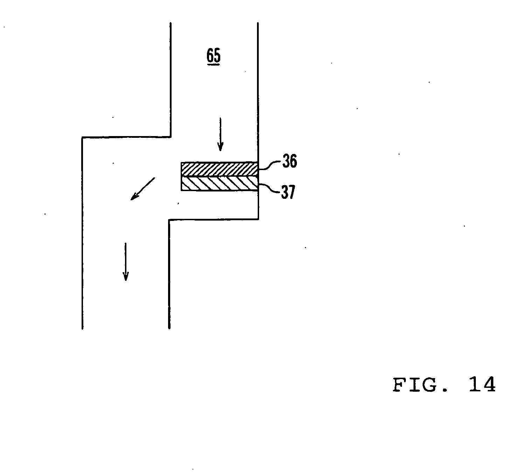

For example, as illustrated in Fig. 14, the sound absorbing member 36 may be attached to the belt chamber 38 side surface of a projecting portion 37 provided inside the exhaust passage 65 having the plural bended portions.

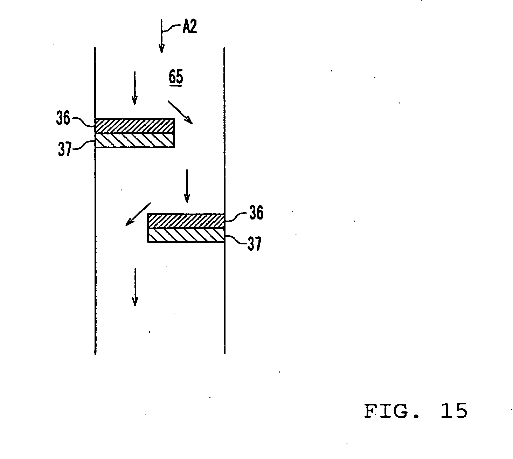

As illustrated in Fig. 15, the sound absorbing member 36 may be provided on each belt chamber 38 side surface of the plural projecting portions 37 disposed in staggered arrangement within the exhaust passage 65 extending straight, for example. In this case, it is preferable that the plural sound absorbing members 36 are so disposed as to cover the flow path of the exhaust passage 65 as viewed from an extending direction A2 of a portion of the exhaust passage 65 close to the belt chamber 38 and away from the region where the projecting portions 37 are formed. According to this modified example, the extending direction A2 of the portion of the exhaust passage 65 close to the belt chamber 38 and away from the region where the projecting portions 37 are formed coincides with the extending direction of the exhaust passage 65.

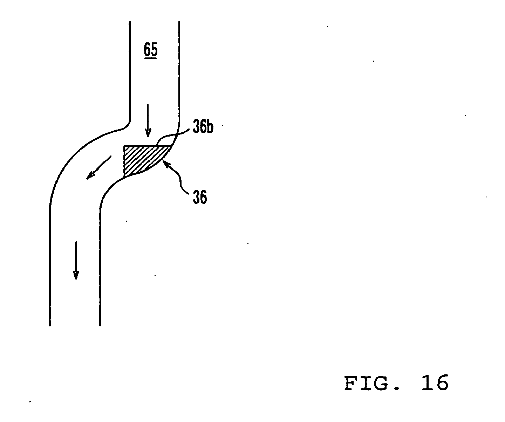

As illustrated in Fig. 16, the sound absorbing member 36 may be attached to each inner wall of plural curved portions provided on the exhaust passage 65 having the plural curved portions and extending in a zigzag line, for example. In this case, it is preferable that the sound absorbing member 36 has a sound absorbing surface 36b extending substantially in the vertical direction with respect to the extending direction of the portion of the exhaust passage 65 close to the belt chamber 38 and away from the region where the sound absorbing member 36 is provided as shown in Fig. 16. In this case, high-frequency sound having high rectilinear propagation can be effectively absorbed by the absorbing surface 36b.

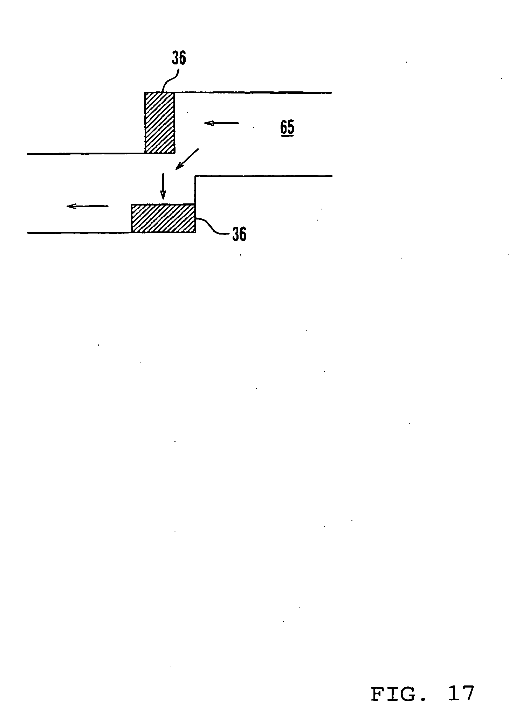

As illustrated in Fig. 17, the sound absorbing member 36 may be provided on each of plural bended portions formed on the exhaust passage 65, for example. The plural sound absorbing members 36 thus attached can effectively absorb sound high-frequency sound.

The invention is applicable to a belt-type continuously variable transmission and a motorcycle.

### DESCRIPTION OF REFERENCE NUMERALS AND SIGNS

- 1: motorcycle
- 2: body frame
- 15: engine unit
- 16: engine
- 17: elt-type continuously variable transmission (CVT)
- 23: crank shaft
- 23a: primary sheave shaft
- 36: sound absorbing member
- 36a: sound absorbing surface
- 38: belt chamber
- 51: primary sheave
- 52: secondary sheave
- 53: secondary sheave shaft
- 55: resin block belt
- 61: transmission case
- 62: inside case
- 63: outside case
- 63a: extension
- 63b: expanding portion
- 65: exhaust passage
- 65a: exhaust opening
- 65b, 65c: bended portion
- 71: intake duct
- 78: intake opening
- 80: crank case
- 81: first case block
- 82: second case block
- 82b: linear convex
- 82c, 82d: expanding portion
- 83: clutch cover
- 94: air chamber

## Claims

1. A belt-type continuously variable transmission (17), comprising:
a primary sheave (51);
a secondary sheave (52);
a block belt (55) wound around the primary sheave (51) and the secondary sheave (52); and
a transmission case (61) which defines the section of a belt chamber (38) accommodating the primary sheave (51), the secondary sheave(52), and the block belt(55),
wherein the transmission case (61) includes
an air passage (65) connecting the inside and the outside of the belt chamber,
**characterized in that** the block belt is a resin block belt (55) and the belt-type continuously variable transmission (17) comprising a first portion of the inner wall of the air passage (65) located in such a position (82f - Fig.10) as to collide with sound waves traveling from the inside of the belt chamber (38) toward the outside, and a second portion of the inner wall of the air passage (65) comprising a sound absorbing member (36) attached to the inner wall of the air passage downstream of said first portion and attached to the inner wall of the air passage (65) in such a position (63a - Fig.10) as to collide with sound waves traveling from the inside of the belt chamber (38) toward the outside.

2. A belt-type continuously variable transmission (17), comprising:
a primary sheave (51);
a secondary sheave (52), and
a block belt (55) wound around the primary sheave (51) and the secondary sheave (52); and
a transmission case (61) which defines the section of a belt chamber (38) accommodating the primary sheave (51), the secondary sheave (52), and the block belt (55),
wherein the transmission case (61) includes
an air passage (65) communicating with the belt chamber (38), and
**characterized in that** the block belt is a resin block belt (55) and the belt-type continuously variable transmission (17) comprising a sound absorbing member (36) attached to the belt chamber (38) side surface of a projection (37-Fig.14, 37-Fig.15) provided inside the exhaust passage.

3. The belt-type continuously variable transmission (17) according to claim 1 or claim 2, wherein the transmission case (61) further includes:
an intake passage (71) communicating with the belt chamber (38); and
an air filter (97) disposed in the intake passage
to transmit air passing through the intake passage (71).

4. The belt-type continuously variable transmission (17) according to any preceding claim, wherein the air passage (65) has at least a portion with a bend or curve (65b, 65c).

5. The belt-type continuously variable transmission (17) according to claim 4, wherein the sound absorbing member (36) is disposed on the inner wall of the bended portion or the curved portion (65c).

6. The belt-type continuously variable transmission (17) according to any preceding claim, further comprising:
an engine (15); and
a crank case (80) accommodating the engine (15),
wherein
the transmission case (61) is attached to the side surface of the crank case (80) in such a position as to define the section of the air passage between the transmission case (61) and the crank case (80),
and
the transmission (61) case has a communication opening through which the belt chamber (38) and the air passage can communicate with each other.

7. The belt-type continuously variable transmission (17) according to claim 6, wherein the transmission case (61) further includes:
an outside case (63),
an inside case (62) disposed at a position shifted toward the crank case (80) from the outside case (63) such that the section of the belt chamber (38) is defined by the inside case (62) and the outside case (63) and such that the section of the air passage is defined by the inside case (62) and the crank case (80); and
one or plural linear (82b) convexes extending in the extending direction of the air passage and projecting toward the inside case (62) are provided on the crank case (80) within the air passage.

8. The belt-type continuously variable transmission (17) according to claim 7, wherein the one or plural linear convexes (82b) contact the inside case (62).

9. The belt-type continuously variable transmission (17) according to any of claims 6 to 8, wherein the transmission case (61) has a lower expanding portion (82c) disposed below the opening of the air passage (65a) in a vehicle height direction and expanding to a position outside the air passage in a vehicle width direction.

10. The belt-type continuously variable transmission (17) according to any of claims 6 to 9, wherein:
the air passage is positioned behind the center of the primary sheave (51) in a vehicle length direction; and
the crank case (80) has a front expanding portion (82d) which is disposed in front of the air passage in the vehicle width direction, expands to a position below the opening of the air passage, and expands to a position outside the air passage in the vehicle width direction.

11. A motorcycle (1) including the belt-type continuously variable transmission (17) according to any preceding claim.

12. The motorcycle (1) according to claim 11, wherein the center of the secondary sheave (52) is positioned above the center of the primary sheave (51).

## Patentansprüche

1. Stufenlos veränderbares Getriebe (17) vom Riemen-Typ, aufweisend:
eine Primärscheibe (51);
eine Sekundärscheibe (52);
einen Blockriemen (55), um die Primärscheibe (51) und die Sekundärscheibe (52) geschlungen, und
ein Getriebegehäuse (61), das den Abschnitt einer Riemenkammer (38) bildet, der die Primärscheibe (51) und den Blockriemen (55) unterbringt,
wobei das Getriebegehäuse (61) enthält
einen Luftkanal (65), der das Innere und das Äußere der Riemenkammer verbindet und das stufenlos veränderbare Getriebe (17) vom Riemen-Typ, und, **dadurch gekennzeichnet, dass** der Blockriemen ein Kunstharz-Blockriemen (55) ist und aufweist einen ersten Abschnitt der Innenwand des Luftkanals (65), angeordnet in solch einer Position (82f- Fig. 10), um mit Schallwellen, die aus dem Inneren der Riemenkammer (38) in Richtung nach außen gehen, zu kollidieren und einen zweiten Abschnitt der Innenwand des Luftkanals (65), der ein schallabsorbierendes Teil (36) aufweist, verbunden mit der Innenwand des Luftkanals stromab des ersten Abschnittes des Luftkanals (65) in solch einer Position (63a- Fig. 10), um mit Schallwellen, die aus dem Inneren der Riemenkammer (38) in Richtung nach außen gehen, zu kollidieren.

2. Stufenlos veränderbares Getriebe (17) vom Riemen-Typ, aufweisend:
eine Primärscheibe (51);
eine Sekundärscheibe (52);
einen Blockriemen (55), um die Primärscheibe (51) und die Sekundärscheibe (52)geschlungen, und
ein Getriebegehäuse (61), das den Abschnitt einer Riemenkammer (38) bildet, der die Primärscheibe (51) und den Blockriemen (55) unterbringt,
wobei das Getriebegehäuse (61)
einen Luftkanal (65) enthält, der mit der Riemenkammer (38) in Verbindung ist und, **dadurch gekennzeichnet, dass** der Blockriemen ein Kunstharz-Blockriemen (55) ist, und das stufenlos veränderbare Getriebe (17) vom Riementrieb- Typ ein schallabsorbierendes Teil (36) aufweist, verbunden mit der Riemenkammer (38)- Seitenoberfläche eines Vorsprungs (37- Fig. 14, 37- Fig. 15), vorgesehen innerhalb des Abgaskanals.

3. Stufenlos veränderbares Getriebe (17) vom Riemen-Typ nach Anspruch 1 oder Anspruch 2, wobei das Getriebegehäuse (61) außerdem enthält:
einen Einlasskanal (71), der mit der Riemenkammer (38) in Verbindung ist;
und
einen Luftfilter (97), angeordnet in dem Einlasskanal, um Luft, die durch den Einlasskanal (71) strömt, zu übertragen.

4. Stufenlos veränderbares Getriebe (17) vom Riemen-Typ nach einem vorhergehenden Anspruch, wobei der Luftkanal (65) zumindest einen Abschnitt mit einem Bogen oder Kurve (65b, 65c) hat.

5. Stufenlos veränderbares Getriebe (17) vom Riemen-Typ nach Anspruch 4, wobei das schallabsorbierende Teil (36) an der Innenwand des gebogenen Abschnittes oder des gekrümmten Abschnittes (65c) angeordnet ist.

6. Stufenlos veränderbares Getriebe (17) vom Riemen-Typ nach einem vorhergehenden Ansprüche, außerdem aufweisend:
eine Brennkraftmaschine (15); und
ein Kurbelgehäuse (80), das die Brennkraftmaschine (15) aufnimmt,
wobei
das Getriebegehäuse (61) mit der Seitenoberfläche des Kurbelgehäuses (80) in solch einer Position verbunden ist, um den Abschnitt des Luftkanals zwischen dem Getriebegehäuse (61) und dem Kurbelgehäuse (80) zu bilden,
und
das Getriebegehäuse (61) eine Verbindungsöffnung hat, durch die die Riemenkammer (38) und der Luftkanal miteinander kommunizieren können.

7. Stufenlos veränderbares Getriebe (17) vom Riemen-Typ nach Anspruch 6, wobei das Getriebegehäuse (61) außerdem enthält:
ein Außengehäuse (63),
ein Innengehäuse (62), angeordnet an einer Position, die in Richtung des Kurbelgehäuses (80) gegenüber dem Außengehäuse (63) derart versetzt ist, dass der Abschnitt der Riemenkammer (38) durch das Innengehäuse (62) und das Außengehäuse (63) und gebildet ist, und derart, dass der Abschnitt des Luftkanals durch das Innengehäuse (62) und das Kurbelgehäuse (80) gebildet ist; und
eine oder mehrere lineare Auswölbungen (82b), die sich in der Verlängerungsrichtung des Luftkanals erstrecken und in Richtung zu dem Innengehäuse (62) vorspringen, an dem Kurbelgehäuse (80) innerhalb des Luftkanals vorgesehen sind.

8. Stufenlos veränderbares Getriebe (17) vom Riemen-Typ nach Anspruch 7, wobei die eine oder mehrere lineare Auswölbungen (82b) das Innengehäuse (62) berühren.

9. Stufenlos veränderbares Getriebe (17) vom Riemen-Typ nach einem der Ansprüche 6 bis 8, wobei das Getriebegehäuse (61) einen unteren expandierten Abschnitt (82c) hat, angeordnet unter der Öffnung des Luftkanals (65a) in einer Richtung der Fahrzeughöhe und der sich in eine Position außerhalb des Luftkanals in Richtung der Breite des Fahrzeuges ausdehnt.

10. Stufenlos veränderbares Getriebe (17) vom Riemen-Typ nach einem der Ansprüche 6 bis 9, wobei:
der Luftkanal hinter der Mitte der Primärscheibe (51) in einer Längsrichtung des Fahrzeuges positioniert ist;
und
das Kurbelgehäuse (80) einen vorderen expandierten Abschnitt (82d) hat, der vor dem Luftkanal in Richtung der Breite des Fahrzeuges angeordnet ist, ausgedehnt zu einer Position unter der Öffnung des Luftkanals und ausgedehnt in eine Position außerhalb des Luftkanals in Richtung der Breite des Fahrzeuges.

11. Motorrad (1), enthaltend das stufenlos veränderbare Getriebe (17) vom Riemen-Typ nach einem vorhergehenden Anspruch.

12. Motorrad (1) nach Anspruch 11, wobei die Mitte der Sekundärscheibe (52) oberhalb der Mitte der Primärscheibe (51) positioniert ist.

## Revendications

1. Transmission à variation continue de type courroie (17), comprenant :
une poulie primaire (51) ;
une poulie secondaire (52) ;
une courroie en bloc (55) enroulée autour de la poulie primaire (51) et de la poulie secondaire (52) ; et
un carter de transmission (61) qui définit la partie d'une chambre de courroie (38) accueillant la poulie primaire (51), la poulie secondaire (52) et la courroie en bloc (55),
dans laquelle le carter de transmission (61) comprend :
un passage d'air (65) connectant l'intérieur et l'extérieur de la chambre de courroie,
**caractérisée en ce que** la courroie en bloc est une courroie en bloc de résine (55) et
la transmission à variation continue de type courroie (17) comprenant une première partie de la paroi intérieure du passage d'air (65) située à une position (82f - figure 10) pour entrer en collision avec des ondes sonores se déplaçant de l'intérieur de la chambre de courroie (38) vers l'extérieur, et une deuxième partie de la paroi intérieure du passage d'air (65) comprenant un élément d'absorption sonore (36) attaché à la paroi intérieure du passage d'air en aval de ladite première partie et attaché à la paroi intérieure du passage d'air (65) à une position (63a - figure 10) pour entrer en collision avec des ondes sonores se déplaçant de l'intérieur de la chambre de courroie (38) vers l'extérieur.

2. Transmission à variation continue de type courroie (17), comprenant :
une poulie primaire (51) ;
une poulie secondaire (52) ; et
une courroie en bloc (55) enroulée autour de la poulie primaire (51) et de la poulie secondaire (52) ; et
un carter de transmission (61) qui définit la partie d'une chambre de courroie (38) accueillant la poulie primaire (51), la poulie secondaire (52) et la courroie en bloc (55),
dans laquelle le carter de transmission (61) comprend :
un passage d'air (65) communiquant avec la chambre de courroie (38), et
**caractérisée en ce que** la courroie en bloc est une courroie en bloc de résine (55) et
la transmission à variation continue de type courroie (17) comprenant un élément d'absorption sonore (36) attaché à la surface latérale de la chambre de courroie (38) d'une projection (37 - figure 14, 37 - figure 15) située à l'intérieur du passage d'échappement.

3. Transmission à variation continue de type courroie (17) selon la revendication 1 ou 2, dans laquelle le carter de transmission (61) comprend en outre :
un passage d'admission (71) communiquant avec la chambre de courroie (38) ; et
un filtre à air (97) disposé dans le passage d'admission pour transmettre l'air passant à travers le passage d'admission (71).

4. Transmission à variation continue de type courroie (17) selon l'une quelconque des revendications précédentes, dans laquelle le passage d'air (65) présente au moins une partie avec un pli ou une courbure (65b, 65c).

5. Transmission à variation continue de type courroie (17) selon la revendication 4, dans laquelle l'élément d'absorption sonore (36) est disposé sur la paroi intérieure de la partie pliée ou de la partie incurvée (65c).

6. Transmission à variation continue de type courroie (17) selon l'une quelconque des revendications précédentes, comprenant en outre :
un moteur (15) ; et
un carter moteur (80) accueillant le moteur (15), et
dans laquelle
le carter de transmission (61) est attaché à la surface latérale du carter moteur (80) à une position définissant la partie du passage d'air entre le carter de transmission (61) et le carter moteur (80), et
le carter de transmission (61) a une ouverture de communication à travers laquelle la chambre de courroie (38) et le passage d'air peuvent communiquer entre eux.

7. Transmission à variation continue de type courroie (17) selon la revendication 6, dans laquelle le carter de transmission (61) comprend en outre :
un carter extérieur (63),
un carter intérieur (62) disposé à une position décalée vers le carter moteur (80) par rapport au carter extérieur (63) de sorte que la partie de la chambre de courroie (38) soit définie par le carter intérieur (62) et le carter extérieur (63) et de sorte que la partie du passage d'air soit définie par le carter intérieur (62) et le carter moteur (80) ; et
une ou plusieurs parties convexes linéaires (82b) s'étendant dans le sens d'extension du passage d'air et se projetant vers le carter intérieur (62) sont fournies sur le carter moteur (80) à l'intérieur du passage d'air.

8. Transmission à variation continue de type courroie (17) selon la revendication 7, dans laquelle la ou les parties convexes linéaires (82b) sont en contact avec le carter intérieur (62).

9. Transmission à variation continue de type courroie (17) selon l'une quelconque des revendications 6 à 8, dans laquelle le carter de transmission (61) présente une partie d'expansion inférieure (82c) disposée au-dessous de l'ouverture du passage d'air (65a) dans un sens de hauteur de véhicule et qui s'étend vers une position à l'extérieur du passage d'air dans un sens de largeur de véhicule.

10. Transmission à variation continue de type courroie (17) selon l'une quelconque des revendications 6 à 9, dans laquelle :
le passage d'air est positionné derrière le centre de la poulie primaire (51) dans un sens de longueur de véhicule ; et
le carter moteur (80) présente une partie d'expansion frontale (82d) qui est disposée à l'avant du passage d'air dans le sens de largeur de véhicule, qui s'étend vers une position au-dessous de l'ouverture du passage d'air, et qui s'étend vers une position à l'extérieur du passage d'air dans le sens de largeur de véhicule.

11. Motocyclette (1) dotée de la transmission à variation continue de type courroie (17) selon l'une quelconque des revendications précédentes.

12. Motocyclette (1) selon la revendication 11, dans laquelle le centre de la poulie secondaire (52) est positionné au-dessus du centre de la poulie primaire (51).
